# EUROPÄISCHE PATENTSCHRIFT

(11) **EP 1 025 201 B1**
(45) Veröffentlichungstag und Bekanntmachung des Hinweises auf die Patenterteilung: **19.05.2004**
(21) Anmeldenummer: 98961029.0
(22) Anmeldetag: 21.10.1998
(51) Int. Cl.: C12C 7/06, C12C 7/20, C12C 13/02

(54) **VERFAHREN ZUR HERSTELLUNG EINER BIERWÜRZE UND/ODER ZUM MAISCHEKOCHEN SOWIE VORRICHTUNG ZUR DURCHFÜHRUNG DES VERFAHRENS**
METHOD FOR PRODUCING A BEER WORT AND/OR FOR BOILING MASH AND A DEVICE FOR CARRYING OUT SAID METHOD
PROCEDE DE PRODUCTION D'UN MOUT DE BIERE ET/OU DE CUISSON DE MAISCHE, ET DISPOSITIF POUR METTRE EN OEUVRE LEDIT PROCEDE

(30) Priorität: 21.10.1997 DE 19746437
(43) Veröffentlichungstag der Anmeldung: 09.08.2000
(73) Patentinhaber: Hrch. Huppmann GmbH, 97318 Kitzingen (DE)
(72) Erfinder: ISENBERG, Ralf, D-85356 Freising (DE)
(74) Vertreter: Böck, Bernhard, Dipl.-Ing.
(86) Internationale Anmeldenummer: PCT/DE1998/003088
(87) Internationale Veröffentlichungsnummer: WO 1999/020735

(56) Entgegenhaltungen:
- DE-U- 29 713 506
- GB-A- 977 387
- GB-A- 2 269 599
- DATABASE WPI Section Ch, Week 8646 Derwent Publications Ltd., London, GB; Class D15, AN 86-303898 XP002099701 & SU 1 219 643 A (VINNITSA POLY) , 23. März 1986

## Beschreibung

Die Erfindung betrifft ein Verfahren zur Herstellung einer Bierwürze und/oder zum Maischekochen sowie eine Vorrichtung zur Durchführung des Verfahrens.

Kernstück der Brauerei ist das Sudhaus. Hier wird Malz geschrotet und mit heißem Wasser eingemaischt. Dies geschieht im Maischbottich. Die Malzinhaltsstoffe erfahren hierbei eine enzymatische Umwandlung bei der Polysaccharide zu Mono- und Disacchariden und hochmolekulares Eiweiß zu mittel- und niedermolekularem Stickstoff sowie freien Aminosäuren abgebaut wird.

Nach dem Läuterprozeß. bei dem feste Bestandteile der Maische, wie z.B. die Spelzen des Malzes, von der flüssigen Phase (Würze) getrennt werden, gelangt diese in die Sudpfanne. Hier wird die Würze gekocht. Zweck der Kochung ist es, zunächst die noch aktiven Enzyme zu inaktivieren, damit es nicht zu einem zu weitgehenden Abbau der Kohlenhydrate und der Eiweiße kommt. Ferner werden die vom Malz stammenden Milchsäurebakterien abgetötet und die Würze durch die Kochung sterilisiert. Die wesentliche Aufgabe der Kochung liegt jedoch in einer Reihe von chemischen Umwandlungen.

Der Gehalt an in der Würze befindlichem Eiweiß wird dadurch reduziert, daß es denaturiert und ausflockt. Dies wird als Bruch bezeichnet, welcher grob sein soll und ein Qualitätsmerkmal der Kochung darstellt. In der Würzeanalytik wird das Eiweiß in verschiedene Fraktionen unterteilt, welche im Bier dann Einfluß auf Gärung, Schaum, Haltbarkeit und Vollmundigkeit haben. Es bestehen Normwerte für diese Fraktionen.

Eine weitere Aufgabe der Würzekochung besteht in der Spaltung des Dimethylsulfid-Precursors (DMS-P) in freies Dimethylsulfid (DMS) und dessen Ausdampfung. Würde sich nach der Kochung, solange die Würze noch heiß ist, noch zuviel DMS-P in der Würze befinden, so könnte sich freies DMS bilden, welches nun im Whirlpool nicht mehr ausdampfen kann und zu einem Geschmacksfehler im fertigen Bier führen würde.

Während des Kochprozesses wird der Würze Hopfen zugegeben. Die Kochtemperatur bewirkt eine Umisomerisation der α-Säure zur Iso-α-Säure. den für die Bierbittere maßgeblichen Wertbestandteil. Der Grad der Umwandlung ist abhängig von der Intensität der Kochung und wird als α-Säure-Ausbeute bezeichnet. Dieser Wert ist von technologischer und wirtschaftlicher Bedeutung, da der Hopfen ein teurer Rohstoff ist. Ein weiteres Kriterium der Kochung ist die Verdampfungsziffer. Die Verdampfung führt zum einen zu einer Konzentrierung der Würze auf die gewünschte Stammwürze und zum anderen entfernt der Wasserdampf Bestandteile, wie das freie DMS (Siedepunkt 37°C), aus der Würze.

Nach der Kochung gelangt die Würze in noch heißem Zustand in den Whirlpool zur Heißtrubentfernung und im Anschluß daran nach der Abkühlung in einem Kühler in den Gärkeller.

Die Erhitzung von Maische und Würze erfolgt nach dem bisher bekannten Stand der Technik üblicherweise in dampfbeheizten Rohrbündelwärmeüberträgern. Diese Kochsysteme können als Innenkocher in die Sudgefäße eingebaut sein oder als Außenkocher unter Verwendung von Pumpen neben dem jeweiligen Sudgefäß stehen. Bei den Innenkochern durchströmt die Würze den Kocher insbesondere aufgrund der Konvektionsströmung. Diese bekannten Kochsysteme haben verschiedene Nachteile.

Für die Wärmeübertragung ist nur eine bestimmte Fläche, nämlich die Außenfläche des Wärmetauschers, vorhanden. Der strömungsmechanischen Konstruktion kommt demnach große Bedeutung zu, um diese Fläche möglichst klein zu halten und einen guten Wirkungsgrad zu erreichen. Es kommt jedoch trotzdem zu Temperaturschichtungen in der ersten Kochphase, was aus den zuvor genannten Gründen die Intensität und damit die Qualität der Kochung reduziert. Hinsichtlich der Regelbarkeit sind diese Kochsysteme relativ träge gegenüber Änderungen der Temperatur des als Heizmittel verwendeten Dampfes.

Für die Dampferzeugung werden Heizkessel verwendet, die ständig betriebsbereit gehalten werden müssen, wodurch vergleichsweise hohe Energie- und Personalkosten verursacht werden. Darüber hinaus unterliegen immer mehr Brauereien örtlich unterschiedlichen strengen Emissionsvorschriften hinsichtlich der Feuerungssysteme der Heizkessel. Moderne Systeme wie Blockheizkraftwerke (BHKW) konnten sich bislang in den Brauereien nicht durchsetzen, da in der Regel kein gleichzeitiger Bedarf von Strom und Wärme vorliegt.

Ausgehend von diesem Stand der Technik ist es die Aufgabe der vorliegenden Erfindung, ein Verfahren zu schaffen, welches es ermöglicht, Bierwürze und/oder Maische in der Norm entsprechenden Qualität in vergleichsweise kurzer Zeit und unter vergleichsweise geringem Energieeinsatz herzustellen.

Diese Aufgabe wird durch ein Verfahren nach der Lehre des Patentanspruchs 1 gelöst.

Es ist eine weitere Aufgabe der Erfindung eine Vorrichtung zur Durchführung des erfindungsgemäßen Verfahrens zu schaffen.

Diese Aufgabe wird durch eine Vorrichtung nach der Lehre der unabhängigen Patentansprüche 8, 9 und 10 gelöst.

Vorteilhafte Ausführungsformen der Erfindung sind Gegenstand der Unteransprüche.

Das erfindungsgemäße Kochsystem beschreitet einen anderen Weg als die Eingangs beschriebenen Kochsysteme und löst deren Nachteile auf wirtschaftliche und umweltgerechte Art und Weise. Beim erfindungsgemäßen Verfahren bzw. bei der erfindungsgemäßen Vorrichtung wird als Energie- bzw. Heizquelle ein Mikrowellenerzeuger, beispielsweise in Form einer Mikrowellenröhre, verwendet, welche z.B. mit dem Strom eines Blockheizkraftwerkes betrieben werden kann. Diese kann entweder außerhalb oder innerhalb des Behälters bzw. Sudgefäßes angeordnet sein.

Im Fall der Anordnung des Mikrowellenerzeuges außerhalb des Sudgefäßes kann die Einleitung der Mikrowellen in den Behälters mittels einer an sich bekannten Einrichtung zur Mikrowellenleitung, beispielsweise durch Reflexion, erfolgen. In alternativer Ausgestaltung kann jedoch auch die Erwärmung der Würze außerhalb des Sudgefäßes in einer Rohrleitung zur Einleitung der Würze in das Sudgefäß beim Durchströmen nach Art eines Außenkochers erfolgen. Dabei kann die Rohrleitung eingangs- und ausgangsseitig mit dem Sudgefäß verbindbar sein, so daß die Würze wiederholt aus dem Sudgefäß entnommen, erwärmt und wieder ins Sudgefäß zurückgeführt werden kann.

Der Mikrowellenerzeuger kann sich auch im Inneren des Sudgefäßes bzw. eines Behälters zur kontinuierlichen Kochung befinden. Im Sudgefäß bzw. Behälter liegt dann über den gesamten als Resonator wirkenden Innenraum verteilt ein dreidimensionales Kochfeld vor, welches zu einer homogenen Erhitzung der Maische oder der Würze vom Beginn der Kochung an führt.

Nach einem Ausführungsbeispiel können die Öffnungen des Sudgefäßes, insbesondere die Dampfauslaßöffnung, durch eine Einrichtung zur Reflexion, beispielsweise in Form einer gitterähnlichen Struktur, davon abgehalten werden, das Sudgefäß (3) zu verlassen. Diese Abschirmung stellt für den Dampf keinen Strömungswiderstand dar.

Der Mikrowellenquelle kann insbesondere im Falle einer Anordnung außerhalb des Sudgefäßes mit einer Wasserkühlung in Form eines Wärmetauschers versehen sein, welche mit Brauwasser als Kühlmittel betrieben werden kann. Dadurch kann die Abwärme des Mikrowellenerzeugers zur Brauwasservorwärmung oder als sonstige Prozesswärme verwendet werden, wodurch sich der Wirkungsgrad insgesamt erhöht.

Der Innenraum des Sudgefäßes kann frei von Einbauten gehalten werden, welche die konvektive Zirkulation der Würze stören könnten. Die Konstruktion des Sudpfanneninneren kann ohne Rücksicht auf den Kocher nach strömungsmechanischen Aspekten erfolgen. Zum Aufheizen der Würze kann der Mikrowellenerzeuiger durch Variation der Pulsfrequenz geregelt werden, was gegenüber der Regelung eines Dampfkessels einen Vorteil darstellt. Die Kochung wird durch einfaches Einschalten der Mikrowellenquelle gestartet. Es besteht keine Notwendigkeit, die Betriebsbereitschaft aufrecht zu erhalten wie bei einem Dampfkessel. Darüber hinaus wird die Regelbarkeit dadurch unterstützt, daß bei einer Leistungsreduzierung des Mikrowellenerzeugers keinerlei Nachheizen auftritt. Die Kochung setzt rasch und überall im Flüssigkeitsvolumen ein. Die chemischen Umsetzungsreaktionen setzen ebenfalls sofort ein, da es bei der Mikrowellenkochung von Beginn der Kochung an durch die Reibung der schwingenden Wassermoleküle zu Temperaturspitzen im atomaren Bereich kommt. Dadurch wird von Anfang an eine intensivere Kochung erzielt, als es bei einem dampfbeheizten Wärmeüberträger möglich wäre, bei dem nur an der Grenzfläche Würze/Heizfläche eine Erwärmung stattfindet. Bei der Mikrowellenkochung findet dabei insgesamt eine bedeutend bessere Umsetzung der Würzeinhaltsstoffe statt.

Im wesentlichen betrifft dies den Eiweißanteil, das Dimethylsulfid und die α-Säure des Hopfens. Die beiden letzteren sind die die Kochzeit der klassischen Kochung bestimmenden Parameter. Diese liegt zwischen 60 und 90 Minuten. Die Umsetzung und Denaturierung des Eiweißes erfolgt bei der Mikrowellenkochung schneller, was sich bereits während der Kochung an einem besseren Ausflocken (Bruchbildung) des Eiweißes feststellen läßt und optisch sichtbar ist. Hierbei wirken sich die oben erwähnten Temperaturspitzen von bis zu 104 °C positiv aus. Die Gesamttemperatur der Würze übersteigt die Temperatur für atmosphärische Kochung nicht. Es lassen sich somit ansatzweise die Vorteile der Kochung bei erhöhter Temperatur nutzen, ohne die konstruktiven und technologischen Nachteile dieser sogenannten Niederdruckkochung (104 °C, geringer Überdruck). Bei der Niederdruckkochung sind die Sudgefäße bedeutend teurer und es treten Probleme seitens der Würzequalität auf, da die thermische Belastung größer ist und zum Ausdampfen der flüchtigen Würzebestandteile das Sudgefäß drucklos gemacht werden muß. Bei der Mikrowellenkochung findet das Ausdampfen ständig statt.

Das Ausdampfen wird bei der Mikrowellenkochung noch dadurch unterstützt, daß aus der Würzeoberfläche austretender Dampf das Mikrowellenfeld nicht verläßt und somit nicht zu Dampfschwaden kondensiert, welche zum Teil wieder in die Flüssigkeit eintreten. Der Dampf kann als Wasserdampfgas ausdampfen. Dies ist einer der Gründe für die bessere Verdampfung bei diesem System.

Beim DMS wirkt sich die Mikrowellenkochung zweifach positiv aus. Die Spaltung des DMS-P geht rascher vonstatten, da dieser Prozeß bei höherer thermischer Intensität schneller abläuft. Die bessere Verdampfung bewirkt ein weitgehenderes Ausdampfen und somit niedrigere Gehalte an freiem DMS bereits nach kürzerer Kochzeit. Die beschriebene chemische Umsetzung des DMS begrenzt die Kochzeit heutiger Systeme auf mindestens 60 Minuten, in der Regel bis zu 90 Minuten. Das Mikrowellenkochsystem läßt Kochzeiten von 30 bis 45 Minuten möglich werden, was die Kapazitäten einer Brauerei erheblich erhöht und den Energieaufwand senkt.

Die Isomerisation der α-Säure des Hopfens ist ebenfalls zeit- und temperaturabhängig. Bei der intensiven Temperatureinwirkung der Mikrowellenkochung geht dieser Vorgang schneller vonstatten, was zur Folge hat, daß nach kürzerer Kochzeit bereits mehr α-Säure isomerisiert ist. Die Hopfengabe kann überdies aufgrund des folglich besseren Wirkungsgrades reduziert werden, was aufgrund des Hopfenpreises beachtliche wirtschaftliche Bedeutung hat.

Ein weiterer Vorteil der Erfindung liegt im niedrigen Polyphenolgehalt der Würze. Diese Gerbstoffe sind in der Würze für das Ausfällen des Eiweißes mitverantwortlich. Ihr Gehalt sollte in der Ausschlagwürze nach der Kochung niedrig sein, da sie sonst auch im fertigen Bier noch Eiweiß ausfällen werden. Dies wirkt sich negativ auf die Haltbarkeit aus. Der Gehalt an Polyphenolen ist bei der Mikrowellenkochung bedeutend niedriger als bei der Kochung des Standes der Technik. Dies erfordert bei der späteren Bierfiltration einen geringeren Einsatz an Stabilisierungsmitteln, mit denen die Gerbstoffe (Polyphenole) aus dem Bier entfernt werden, um somit indirekt Eiweißtrübungen zu verhindern.

Im folgenden wird die Erfindung anhand lediglich Ausführungsbeispiele darstellender Zeichnungen und Diagramme näher erläutert. Es zeigt
- **Fig.1**: in schematischer biockdiagrammartiger Gestaltung ein erstes Ausführungsbeispiel einer erfindungsgemäßen Vorrichtung mit außerhalb des Sudgefäßes angeordnetem Mikrowellenerzeuger;
- **Fig. 2**: in einer der Fig. 1 entsprechenden Darstellung ein zweites Ausführungsbeispiel einer erfindungsgemäßen Vorrichtung mit im Sudgefäß angeordnetem Mikrowellenerzeuger; und
- **Fig. 3, 4, 5**: Analysendiagramme einer mit dem erfindungsgemäßen Verfahren hergestellten Würze.

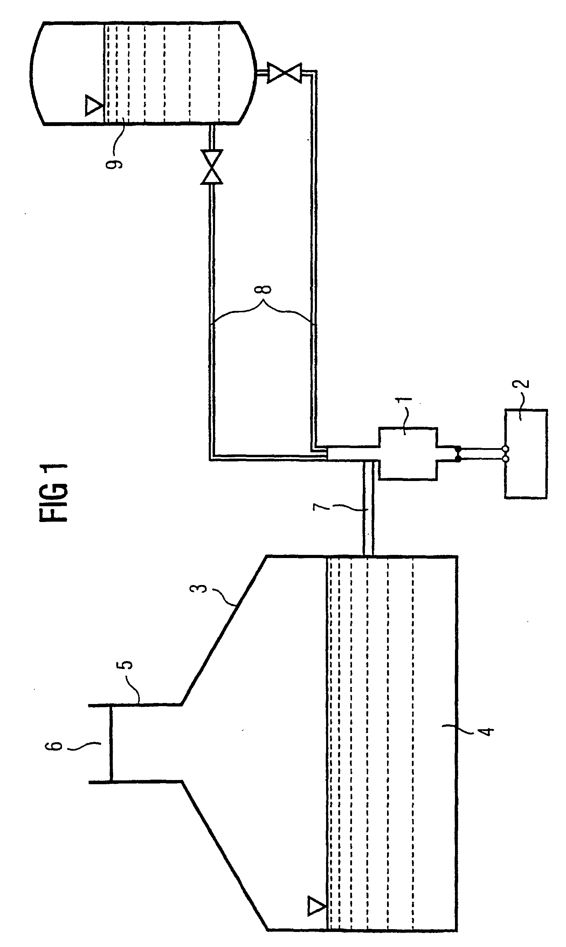

Die in Fig. 1 dargestellte Vorrichtung weist einen Behälter 3 in Form eines Sudgefäßes auf. In diesen Behälter ist die zu kochende Würze 4 einbringbar. Im Decken- oder Deckelbereich des Behälters 3 ist eine Dampfauslaßöffnung 5 zur Abführung des verdampften Wassers und der darin enthaltenen flüchtigen Würzebestandteile angeordnet.

Außerhalb des Behälters 3 ist ein Mikrowellenerzeuger 1 angeordnet, der über einen Mikrowellenleiter 7, beispielsweise in Form eines Reflexionsrohres, mit dem Innenraum des Behälters 3 verbunden ist. Durch diesen Mikrowellenleiter 7 sind die im Mikrowellenerzeuger 1 erzeugten Mikrowellen zur Würzeerwärmung in den Behälter 3 einleitbar.

Der Mikrowellenerzeuger ist über Rohrleitungen 8 mit einem Gefäß 9, das Brauwasser enthält, verbunden. Dabei wird Brauwasser während des Betriebs des Mikrowellenerzeugers 1 zur Abkühlung über eine nicht dargestellte Wärmetauschereinheit geführt, so daß die Abwärme des Mikrowellenerzeugers als Prozesswärme wiedergewinnbar und gegebenenfalls in einem Energiespeicher zwischenspeicherbar ist.

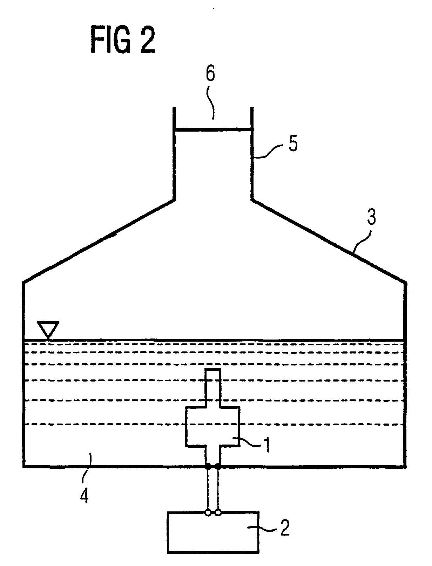

Beim in Fig. 2 dargestellten Ausführungsbeispiel ist der Mikrowellenerzeuger 1 innerhalb des Sudgefäßes 3 angeordnet, so daß die Mikrowellen mehr oder weniger gleichmäßig verteilt im gesamten Flüssigkeitsvolumen in die Würze 4 einleitbar sind.

Zur Vermeidung des Austritts von Mikrowellen aus dem Behälter 3 durch die Dampfablaßöffnung 5 ist diese mit einem Mikrowellenreflektor 6 in Form einer Gitterstruktur versehen. Die Maschenweite des Gitters ist dabei in an sich bekannter Weise in Abhängigkeit von der Frequenz bzw. Wellenlänge der Mikrowelle so zu wählen, daß kein Wellendurchtritt erfolgen kann. Für den abzuführenden Dampf stellt ein solches Gitter jedoch kein Strömungshindernis dar.

Die Stromversorgung des Mikrowellenerzeugers erfolgt über ein lediglich schematisch angedeutetes Blockheizkraftwerk 2.

### Beispiel:

Es wurden Versuche zur Kochung von Würze durchgeführt, wobei die Erhitzungsarten und die Erhitzungszeiten variiert wurden.

Die Würzen wurden 30, 45 und 60 Minuten gekocht.

Als Erhitzungssysteme wurden eine Mikrowellenquelle (Mikrowelle 1 und 2) und eine elektrische Direkterhitzung (Topf) verwendet.

Die Würzeproben stammten aus einem Sud. Die Hopfengaben erfolgten bei jedem Versuch direkt nach Kochbeginn. Qualität und Quantität der Hopfengaben war jeweils gleich.

Während der Kochung fand eine Kontrolle der Verdampfungsintensität und der Eiweißkoagulation (Bruchbildung) statt.

Es konnte festgestellt werden, daß bei der Mikrowellenkochung die Verdampfung wesentlich intensiver war.

Die Eiweißkoagulation zeichnete sich bei der Mikrowellenkochung durch eine außergewöhnlich grobe Bruchbildung aus, was als sehr positives Qualitätsmerkmal zu sehen ist. Diese positiven Befunde ergaben sich bei der Mikrowellenkochung aller drei Kochzeiten.

Die konventionelle Kochung konnte diese Resultate nicht erreichen.

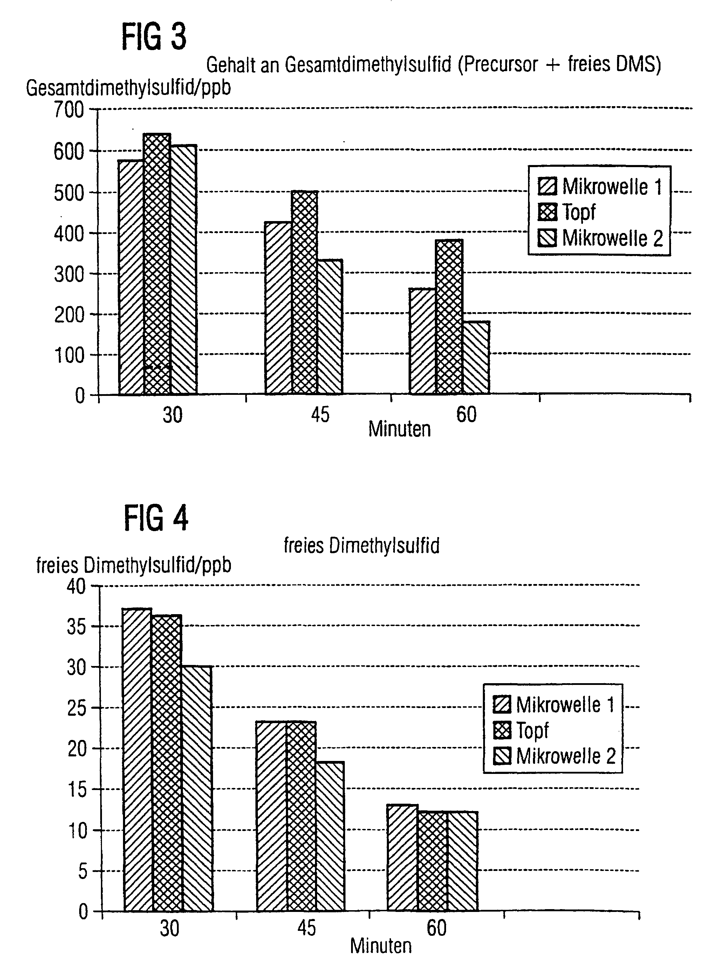

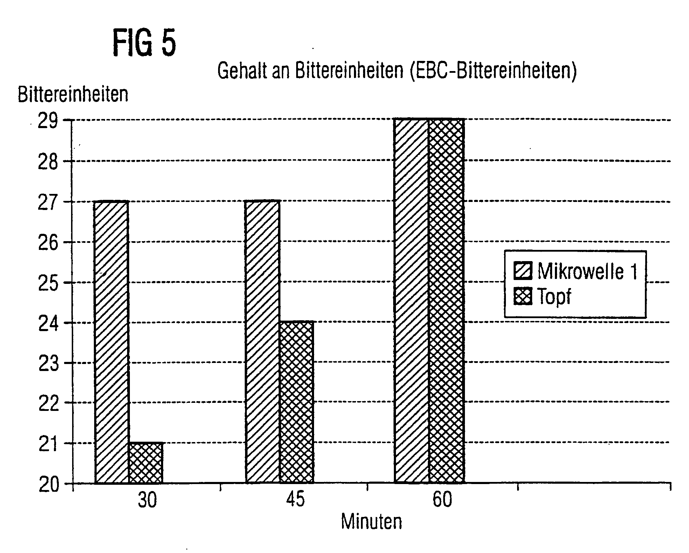

Die Würzen wurden nach dem Abkühlen analysiert. Die Ergebnisse sind den Figuren 3, 4 und 5, sowie der Beschreibung zu entnehmen.

Es kann festgestellt werden, daß bei der Mikrowellenkochung in bedeutend kürzerer Zeit bessere Würzen erzielt werden.

## Patentansprüche

1. Verfahren zur Herstellung von Ausschlagwürze zur Herstellung von Bier, mit folgenden Verfahrensschritten:
a) Beschicken eines Behälters (3) mit von unlöslichen Stoffen im wesentlichen befreiter Würze (4);
b) Einleiten von Mikrowellen in den Behälter (3) zum Erwärmen der Würze (4) bis zur gewünschten Kochtemperatur;
c) Zugabe von Würzmitteln nach Kochbeginn der Würze (4); und
d) Aufrechterhalten der Kochtemperatur für eine vorgegebene Zeitdauer unter gleichzeitigem Ableiten von verdampftem bzw. gasförmigem Wasser sowie darin enthaltenen flüchtigen Bestandteilen.

2. Verfahren nach Anspruch 1,
**dadurch gekennzeichnet,**
**daß** im Verfahrensschritt d) die Kochtemperatur für 10 bis 75 Minuten, vorzugsweise 15 bis 60 Minuten, besonders bevorzugt 30 bis 45 Minuten, aufrechterhalten wird.

3. Verfahren nach Anspruch 1 oder 2,
dadurch gekenn zeichnet,
daß die Mikrowellen in einem Frequenzbereich zwischen 1 GHz und 100 GHz, vorzugsweise von 2,45 GHz, verwendet werden.

4. Verfahren nach einem der Ansprüche 1 bis 3,
**dadurch gekennzeichnet,**
**daß** die Mikrowellen mittels eines Oszillators erzeugt werden.

5. Verfahren nach einem der Ansprüche 1 bis 4,
**dadurch gekennzeichnet,**
**daß** die Abwärme des Mikrowellenerzeugers (1) im Brauprozeß, insbesondere zur Erwärmung von Brauwasser, verwendet wird.

6. Verfahren nach einem der Ansprüche 1 bis 5,
**dadurch gekennzeichnet,**
**daß** der Strom zum Betreiben der Einrichtung zur Erzeugung der Mikrowellen einem Blockheizkraftwerk (2) entnommen wird.

7. Verfahren nach einem der Ansprüche 1 bis 6,
**dadurch gekennzeichnet,**
**daß** das Verfahren diskontinuierlich oder kontinuierlich durchführbar ist.

8. Vorrichtung zur Durchführung des Verfahrens nach einem der Ansprüche 1 bis 7,
**gekennzeichnet durch**
einen Behälter (3) zur Aufnahme der von unlöslichen Stoffen im wesentlichen befreiten Würze (4) und einen im Inneren des Behälters angeordneten Mikrowellenerzeuger (1).

9. Vorrichtung zur Durchführung des Verfahrens nach einem der Ansprüche 1 bis 7,
**gekennzeichnet durch**
einen Behälter (3) zur Aufnahme der von unlöslichen Stoffen im wesentlichen befreiten Würze (4), einen außerhalb des Behälters angeordneten Mikrowellenerzeuger (1) und einer Einrichtung zur Einleitung der im Mikrowellenerzeuger (1) erzeugten Mikrowellen in den Behälter (3).

10. Vorrichtung nach einem der Ansprüche 8 und 9,
**dadurch gekennzeichnet,**
**daß** im Behälter (3) im Bereich der Behälteröffnungen, insbesondere der Dampfauslaßöffung (5), eine Einrichtung (6) zur Reflexion der Mikrowellen in den Innenraum des Behälters (3) angeordnet ist.

11. Vorrichtung gemäß Anspruch 9,
**gekennzeichnet durch**
einen Behälter (3) zur Aufnahme der von unlöslichen Stoffen im wesentlichen befreiten Würze (4), mindestens eine Rohrleitung zur Einleitung der Würze in den Behälter und einen außerhalb des Behälters (3) angeordneten Mikrowellenerzeuger (1), wobei die Einleitung der Mikrowellen in die Würze im Bereich der Rohrleitung während des Durchströmens erfolgt.

12. Vorrichtung nach einem der Ansprüche 8 bis 11,
**dadurch gekennzeichnet,**
**daß** Mikrowellenleistung mittels einer elektronischen Steuer- und Regeleinrichtung einstellbar ist.

13. Vorrichtung nach einem der Ansprüche 8 bis 12,
**dadurch gekennzeichnet,**
**daß** im Behälter (3) ein mikrowellendurchlässiges Gefäß zur Aufnahme des Würzmittels angeordnet ist.

14. Verfahren zur Herstellung von Maische zur Herstellung von Bier, mit folgenden Schritten:
Beschicken eines Behälters (3) mit Wasser und Malzschrot und/oder weiteren Kohlehydratquellen;
Einleiten von Mikrowellen in den Behälter (3) zum Erwärmen der Maische bis zur Abmaischtemperatur.

## Claims

1. Process for producing cast-out wort to produce beer, with the following process steps:
a) charging a container (3) with wort (4) substantially freed from insoluble substances;
b) introducing microwaves into the container (3) to heat the wort (4) to the desired boiling temperature;
c) adding wort spices after the wort (4) has started to boil; and
d) maintaining the boiling temperature for a specified time with simultaneous discharge of evaporated and/or gaseous water and volatile constituents contained therein.

2. Process according to Claim 1,
**characterized in that**
in process step d) the boiling temperature is maintained for 10 to 75 minutes, preferably 15 to 60 minutes, particularly preferably 30 to 45 minutes.

3. Process according to Claim 1 or 2,
**characterized in that**
the microwaves are used in a frequency range between 1 GHz and 100 GHz, preferably of 2.45 GHz.

4. Process according to one of claims 1 to 3,
**characterized in that**
the microwaves are generated by means of an oscillator.

5. Process according to one of Claims 1 to 4,
**characterized in that**
the waste heat of the microwave generator (1) is used in the brewing process, particularly to heat mash liquor.

6. Process according to one of Claims 1 to 5,
**characterized in that**
the power to operate the device for generating the microwaves is taken from a block combined heat and power station (2).

7. Process according to one of the Claims 1 to 6,
**characterized in that**
the process may be implemented continuously or discontinuously.

8. Device for implementing the process according to one of Claims 1 to 7,
**characterized by**
a container (3) for receiving wort (4) substantially freed from insoluble substances and a microwave generator (1) arranged in the interior of the container.

9. Device for implementing the process according to one of Claims 1 to 7,
**characterized by**
a container (3) for receiving wort (4) substantially freed from insoluble substances, a microwave generator (1) arranged outside the container and a device for introducing the microwaves generated in the microwave generator (1) into the container (3).

10. Device according to one of Claims 8 and 9,
**characterized in that**
an arrangement (6) for reflecting the microwaves into the interior chamber of the container (3) is arranged in the container (3) in the region of the container openings, particularly the steam outlet opening (5).

11. Device according to Claim 9,
**characterized by**
a container (3) for receiving wort (4) substantially freed from insoluble substances, at least one pipe for introducing the wort into the container and a microwave generator (1) arranged outside the container (3), wherein the introduction of the microwaves into the wort takes place in the region of the pipe during through-flow.

12. Device according to one of Claims 8 to 11,
**characterized in that**
microwave power can be set by means of an electronic control and regulation device.

13. Device according to one of Claims 8 to 12,
**characterized in that**
a microwave-permeable vessel to receive the wort spices is arranged in the container (3).

14. Process for producing mash to produce beer, with the following steps:
charging a container (3) with water and grist and/or further carbohydrate sources;
introducing microwaves into the container (3) to heat the mash up to the mash completion temperature.

## Revendications

1. Procédé pour la préparation de moût soutiré destiné à la préparation de la bière, possédant les étapes opératoires ci-après consistant à :
a) charger un récipient (3) avec un moût (4) essentiellement libéré des substances insolubles ;
b) introduire des micro-ondes dans le récipient (3) afin de réchauffer le moût (4) jusqu'à la température de cuisson désirée ;
c) ajouter des condiments après le début de la cuisson du moût (4) ; et
d) maintenir la température de cuisson pendant un laps de temps prédéfini tout en évacuant simultanément l'eau évaporée, respectivement transformée en gaz, ainsi que les constituants volatils qu'elle contient.

2. Procédé selon la revendication 1, **caractérisé en ce que**, lors de l'étape opératoire d), on maintient la température pendant un laps de temps de 10 à 75 minutes de préférence de 15 à 60 minutes, de manière particulièrement préférée de 30 à 45 minutes.

3. Procédé selon la revendication 1 ou 2, **caractérisé en ce qu'**on n'utilise les micro-ondes dans une gamme de fréquences entre 1 GHz et 100 GHz, de préférence de 2,45 GHz.

4. Procédé selon l'une quelconque des revendications 1 à 3, **caractérisé en ce que** les micro-ondes sont générées à l'aide d'un oscillateur.

5. Procédé selon l'une quelconque des revendications 1 à 4, **caractérisé en ce qu'**on utilise la chaleur perdue du générateur de micro-ondes (1) dans le processus de brassage, en particulier pour réchauffer l'eau de brassage.

6. Procédé selon l'une quelconque des revendications 1 à 5, **caractérisé en ce qu'**on prélève le courant, pour entraîner le mécanisme destiné à générer les micro-ondes, d'une centrale thermique en montage-bloc avec chauffage à distance (2).

7. Procédé selon l'une quelconque des revendications 1 à 6, **caractérisé en ce que** le procédé peut être mis en oeuvre en discontinu ou en continu.

8. Dispositif pour la mise en oeuvre du procédé selon l'une quelconque des revendications 1 à 7, **caractérisé par** un récipient (3) pour la réception du moût (4) essentiellement libéré des substances insolubles et par un générateur de micro-ondes (1) disposé à l'intérieur du récipient.

9. Dispositif pour la mise en oeuvre du procédé selon l'une quelconque des revendications 1 à 7, **caractérisé par** un récipient (3) pour la réception du moût (4) essentiellement libéré des substances insolubles, par un générateur de micro-ondes (1) disposé à l'extérieur du récipient et par un mécanisme pour introduire, dans le récipient (3), les micro-ondes obtenues par le générateur de micro-ondes (1).

10. Dispositif selon l'une quelconque des revendications 8 et 9, **caractérisé en ce que**, dans le récipient (3), dans la zone des ouvertures du récipient, en particulier dans la zone de l'ouverture d'échappement de vapeur (5), est disposé un mécanisme (6) pour la réflexion des micro-ondes à l'intérieur du récipient (3).

11. Dispositif selon la revendication 9, **caractérisé par** un récipient (3) pour la réception du moût (4) essentiellement libéré des substances insolubles, par au moins une canalisation pour introduire le moût dans le récipient et par un générateur de micro-ondes (1) disposé à l'extérieur du récipient (3), l'introduction des micro-ondes dans le moût ayant lieu dans la zone de la canalisation lors de la circulation.

12. Dispositif selon l'une quelconque des revendications 8 à 11, **caractérisé en ce que** la puissance de micro-ondes peut être réglée à l'aide d'un mécanisme de commande et de réglage électronique.

13. Dispositif selon l'une quelconque des revendications 8 à 12, **caractérisé en ce que**, dans le récipient (3), est disposé un récipient qui laisse passer les micro-ondes pour la réception du condiment.

14. Procédé pour la préparation de trempe destinée à la préparation de la bière, comprenant les étapes ci-après consistant à :
charger un récipient (3) avec de l'eau et avec du malt égrugé et/ou avec d'autres sources d'hydrates de carbone ; introduire des micro-ondes dans le récipient (3) afin de réchauffer la trempe jusqu'à la température de termination de la trempe.
